Europäisches Patentamt

European Patent Office

Office européen des brevets

(19)

(11) Numéro de publication: **0 108 652**
**B1**

(12) **FASCICULE DE BREVET EUROPÉEN**

(45) Date de publication du fascicule du brevet:
23.09.87

(51) Int. Cl.⁴: **A 63 B 49/10**

(21) Numéro de dépôt: **83401206.4**

(22) Date de dépôt: **13.06.83**

(54) **Cadre de raquette de tennis et son procédé de fabrication.**

(30) Priorité: 14.06.82 FR 8210292
25.04.83 FR 8306724

(43) Date de publication de la demande:
16.05.84 Bulletin 84/20

(45) Mention de la délivrance du brevet:
23.09.87 Bulletin 87/39

(84) Etats contractants désignés:
AT BE CH DE FR GB IT LI LU NL SE

(56) Documents cité:
DE-A-2 153 172
FR-A-2 102 585
FR-A-2 126 488
FR-A-2 352 562
GB-A-1 122 895
GB-A-1 362 116

(73) Titulaire: COUSIN FRERES S.A., 8 Rue Abbé
Bonpain, F-59117 Wervicq- Sud (FR)
Titulaire: Robin, Jacques André, 125 boulevard
Malesherbes, F-75017 Paris (FR)

(72) Inventeur: Cousin, Jean- Claude, La Sapinière
Route de Linselles, F-59117 Wervicq Sud (FR)
Inventeur: Robin, Jacques André, 125 boulevard
Malesherbes, F-75017 Paris (FR)

(74) Mandataire: Viard, Jean, Cabinet VIARD 28 bis,
avenue Mozart, F-75016 Paris (FR)

## Description

La présente invention a pour objet un cadre de raquette de tennis ou jeu analogue ainsi que son procédé de fabrication.

La conception des raquettes de tennis figée, pendant cinquante ans, évolue très rapidement depuis dix ans.

L'expansion du tennis et l'évolution en quantité et en qualité des joueurs pose un problème de matériel rendu plus sensible par le transfert des fabrications vers les pays à faible coût de main d'oeuvre et la généralisation de nouvelles formes de cadres autorisée par l'absence de réglementation.

Du fait de l'industrialisation des raquettes en bois, la sélection des troncs est devenue moins rigoureuse, le séchage naturel a été remplacé par un séchage à la vapeur et le déroulage des bois a été substitué à l'assemblage de lamelles tranchées dans le sens des fibres, ce qui se traduit par une baisse des performances de ces raquettes. Le collage, l'usinage, le perçage, réalisés par voie semi-automatique ne permettent pas d'obtenir une qualité égale à celle obtenue par les voies artisanales.

Le principe déjà ancien de cadre réalisé à partir d'un profilé métallique n'est fiable qu'avec de l'acier trempé avec jonction brasée entre branches, mais il n'évite pas la nécessité de centrage absolu de la balle et les vibrations qui sont préjudiciables au joueur. Il sous-entend une application uniquement pous les cadres de moyenne qualité.

Les structures "sandwich" à revêtement parallèle au plan du cordage utilisées sur une fibre neutre plastique ou en renforcement d'une structure bois travaillent en cisaillement du fait des contraintes statiques ou dynamiques du cordage. Elles améliorent la résistance en flexion des cadres mais posent des problèmes de collage. La découpe de tissus imprégnés ne permet pas d'obtenir l'orientation convenable des fibres et se traduit par des pertes de matière prohibitives. L'amélioration possible des revêtements ne peut éliminer les problèmes de cisaillement. Des renforts métalliques ou stratifiés perpendiculaires au plan de cordage sont illusoires du fait du perçage et de leur positionnement trop souvent central.

Les solutions connues faisant appel au moulage de fibres continues de verre ou de carbone, imprégnées de résines epoxydes thermo-durcissables impliquent une fabrication longue d'où un prix de revient élevé. Les raquettes à fibres convenablement orientées sont réservées à l'élite.

L'utilisation de produits thermoplastiques rapidement mis en oeuvre permet de réduire le nombre d'operations nécessaires à la fabrication d'un cadre. Le choix de la qualité et l'addition de fibres coupées permet d'obtenir une matière anisotrope de haut module d'élasticité, douée d'excellentes caractéristiques de retour. Les polyamides chargés de fibres de carbone, formant un "compound", sont utilisés:

- par injection simple, mais la densité du compound impose de réduire les sections du cadre, d'où une diminution du moment d'inertie;

- par injection d'un compound allégé par un agent gonflant (Brevet E.U.A. N° 3.981.504 au nom de P.P.G. Industries) mais la perte de module en flexion ne compense pas l'augmentation possible des sections;

- par injection sur un noyau fusible (Brevet E.U.A. N° 4.297.308 au nom de DUNLOP) qui apporte l'avantage d'une structure creuse avec renforts centraux et jonction intégrée entre branches mais se traduit par une fabrication extrêmement onéreuse;

- par assemblage d'éléments injectés conduisant à une nervure interne continue (Brevet E.U.A. N° 4 194 738 au nom de HITACHI).

L'injection suppose une limite au taux de carbone mélangé dans le compound qui ne permet pas d'exploiter toutes les caractéristiques du matériau. Lors de l'injection, une gaine de thermoplastique au contact du moule modifie la répartition des fibres et les caractéristiques du compound. La pression d'injection et les cheminements à travers de faibles sections provoquent une rupture des fibres telle que leur longueur résiduelle ne permet pas la conservation des caractéristiques théoriques. La forme et les dimensions d'un cadre imposent la soudure de flux de matière et, en tête de raquette, une perte locale de résistance également observée entre les perçages. Malgré ces inconvénients qui, ajoutés à des défauts de conception, provoquent une rigidité nettement insuffisante, d'excellentes caractéristiques de retour ont été obtenues avec des raquettes à section pleine injectées à partir de compounds non allégés qui confirment la validité du matériau et permettent de définir une nouvelle solution.

On a déjà proposé de fabriquer un cadre de raquette de tennis à partir d'un tube en élément profilé.

Dans FR-A-2 102 585 est décrit un cadre de raquette de tennis obtenu par cintrage d'un profilé métallique ou par moulage d'une résine époxy.

Dans FR-A-2 352 562 est décrite une raquette possédant un cadre en matière plastique renforcée de fibres comprenant une gorge destinée à l'amortissement des vibrations. Une barre composée d'un noyau de résine expansée et d'une enveloppe constituée par une pluralité de couches complexes de fibres pré-imprégnées de résine thermo-durcissable est courbée puis polymérisée à chaud sous pression.

Dans GB-A-1 362 116, le noyau du cadre est constitué par une mousse thermoplastique et sur ce noyau est bobiné un ruban de renforcement. L'ensemble est moulé et polymérisé à chaud.

Dans GB-A-1 122 895 est décrit un cadre de raquette en matière synthétique moulée sur un noyau léger.

Tous ces brevets concernent des raquettes dont le cadre est dans certains cas constitué de matière plastique dont le cadre est d'abord conformé, puis polymérisé par chauffage pour prendre sa forme définitive. Ces différentes opérations s'opposent à une fabrication à cadence élevée de raquettes de tennis. Dans la présente invention, la section du profilé reste constante lors de l'opération du cintrage.

Selon la présente invention, le procédé de fabrication d'un cadre de raquette de tennis ou autres jeux, lequel cadre est constitué par un élément profilé qui à partir du milieu de sa longueur totale est arquée symétriquement pour former la tête du cadre et dont les extrémités sont réunies à leur point de raccordement par au moins une entretoise surmoulée et s'étendent parallèlement l'une à l'autre pour former l'armature du manche, une poignée étant surmoulée sur les extrémités parallèles par injection sur le profilé après cintrage de celui-ci, est caractérisé en ce que ledit profilé est un profilé en résine thermoplastique extrudé puis cintré à chaud.

Selon une autre caractéristique de l'invention, le profilé précité présente des compartiments longitudinaux qui sont remplis, après extrusion, par une mousse polyuréthane plus ou moins dense qui permet d'obtenir le poids désiré pour le cadre et protège le profilé contre l'écrasement lors du cintrage.

Le profilé est de préférence constitué par l'extrusion d'un compound thermoplastique tel que du polyamide 11, 12 ou 6, 12, à faible absorption d'eau, du polyuréthane, une résine acétal, auquel sont incorporées des fibres de carbone dont la longueur est supérieure à 1 mm et avantageusement de l'ordre de 5 à 6 mm, de type haute résistance.

L'opération d'extrusion, contrairement à l'injection, permet de conserver une longueur et une répartition homogène des fibres à l'intérieur du cadre, et par là, d'exploiter toutes leurs qualités.

D'autres caractéristiques et avantages de l'invention apparaîtront au cours de la description qui va suivre de modes de réalisation particuliers, donnés uniquement à titre d'exemples non limitatifs, en regard des figures qui représentent:
   - la Fig.1, un cadre de raquette selon l'invention;
   - la Fig.2, une première forme de profilé;
   - la Fig.3, une autre forme de profilé;
   - les Figs. 4 à 9, les différentes étapes du procédé de fabrication;
   - la Fig.10, une variante du procédé de fabrication;
   - la Fig.11, un schéma de l'imprégnation d'une mèche de fibres de carbone;
   - la Fig.12, un schéma montrant la coextrusion du compound et des mèches de fibre;
   - la Fig.13, une section d'un cadre obtenu selon la présente invention.

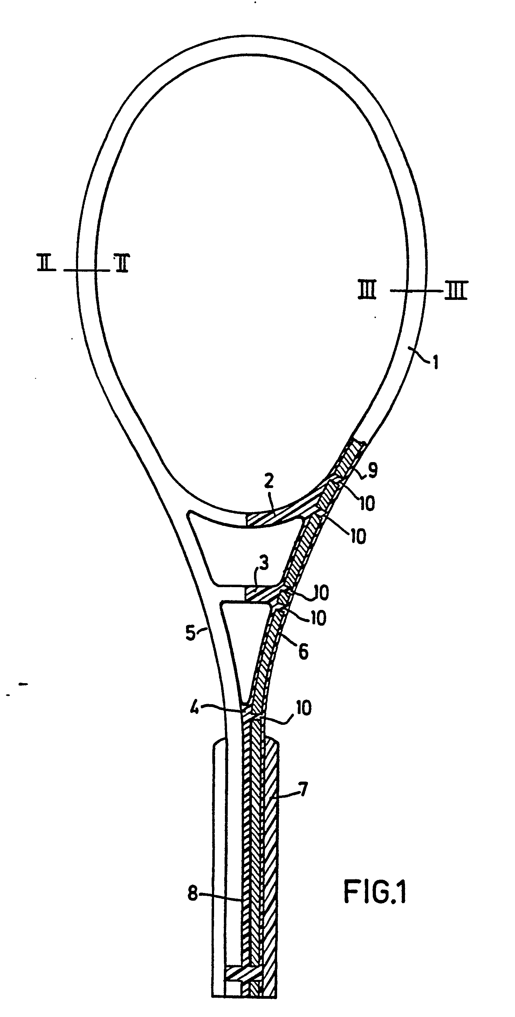

Sur la Fig.1, le cadre 1 a la forme générale d'un ovale, symétrique par rapport à son axe longitudinal, mais dissymétrique par rapport à son axe transversal. Il se compose d'un profilé replié et cintré de manière à présenter deux branches 5 et 6 réunies à leur partie inférieure par des entretoises 2, 3, et par une soudure 4. L'entretoise supérieure 2 sera appelée coeur de la raquette par la suite. Au-dessous de la soudure 4, subsiste une fente 8 qui est remplie ultérieurement de polyuréthane, les deux extrémités des branches 5 et 6 étant emprisonnées dans une poignée injectée 7. Comme il a été dit précédemment, le profilé est cintré à chaud de manière à prendre la forme désirée. Les entretoises 2, 3 et la soudure 4 sont formées par injection d'un polyamide 11, 12 ou 6-12, un polyuréthane ou une résine acétal, analogue à celui du profilé du cadre, mais qui peut être un polyamide 6-6.

Selon une autre caractéristique de l'invention, la matière injectée pour former les entretoises s'étend en une couche 9 de part et d'autre du cadre et traverse des trous 10 de manière à constituer des rivets plastiques, l'injection étant effectuée à travers les trous 10. Ainsi, les deux branches 5 et 6 sont très solidairement réunies et il n'y a aucun risque de désolidarisation même sous les efforts les plus violents, la résistance en torsion étant maximum.

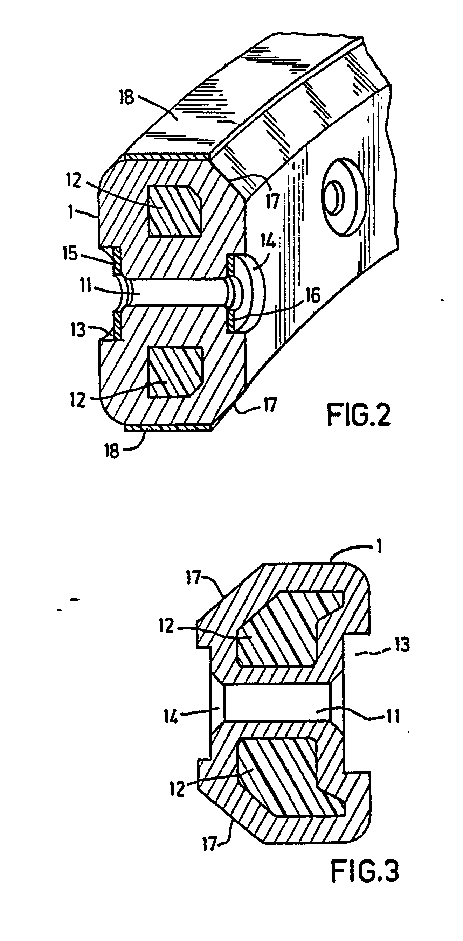

La Fig.2 est une coupe selon la ligne II-II de la Fig.1 et elle montre la structure d'un profilé 1. Ce profilé est composé d'un compound de polyamide 11, 12 ou 6-12 et de fibres de carbone. Il est également possible, afin d'obtenir une densité de l'ordre de 0,9 pour l'ensemble du cadre, d'introduire dans le compound des microbilles creuses de verre telles que celles qui sont connues sous le nom de "filite" (Marque déposée). Lors de l'extrusion, deux cavités longitudinales 12 sont formées à l'intérieur du profilé. Ces deux cavités sont remplies ultérieurement par une mousse de polyuréthane dont la densité est choisie en fonction du poids définitif de la raquette. Cette mousse évite, par ailleurs, l'écrasement du profilé lors du cintrage. Compte tenu de la position de la coupe, un trou 11 permet le passage d'une corde (non représentée). De préférence, les trous 11 de passage des cordes sont au nombre de soixante dix pour une raquette à tamis moyen et une seule corde passe dans un trou. Ceci permet, bien qu'au prix d'une légère augmentation du nombre de trous (70 contre 64) d'en réduire le diamètre et, par suite, d'augmenter la résistance globale de la raquette. Les bords des trous 11 sont chanfreinés en 13, du côté extérieur et en 14 du côté intérieur du cadre afin que les cordes ne portent pas sur des angles vifs qui les endommageraient. On notera que lorsque le cadre est réalisé en polyamide, il n'est pas nécessaire de prévoir de protection particulière pour les cordes. Il est possible de coextruder avec le profilé principal des barrettes 15 ou 16 qui ont pour but d'assurer une meilleure tenue du profilé lors de l'extrusion. Elles permettent éventuellement d'assurer le tarage de la raquette ou de constituer une décoration. Il est de même possible de coextruder, à la périphérie du cadre, des bandes 18 qui assurent la décoration et le maintien du profilé. Enfin, le cadre présente, du côté intérieur, un pan coupé 17. On a en effet remarqué que cette partie du cadre n'intervenait en aucune façon dans les efforts en flexion et en torsion de la raquette après cordage et le poids total peut ainsi être allégé de quelques grammes.

La Fig.3 représente un autre mode de realisation du profilé qui est une coupe selon la ligne III-III de la Fig.1. Les mêmes références désignent les mêmes éléments que sur la Fig.2. Abstraction a été faite des bandes ou barrettes éventuelles.

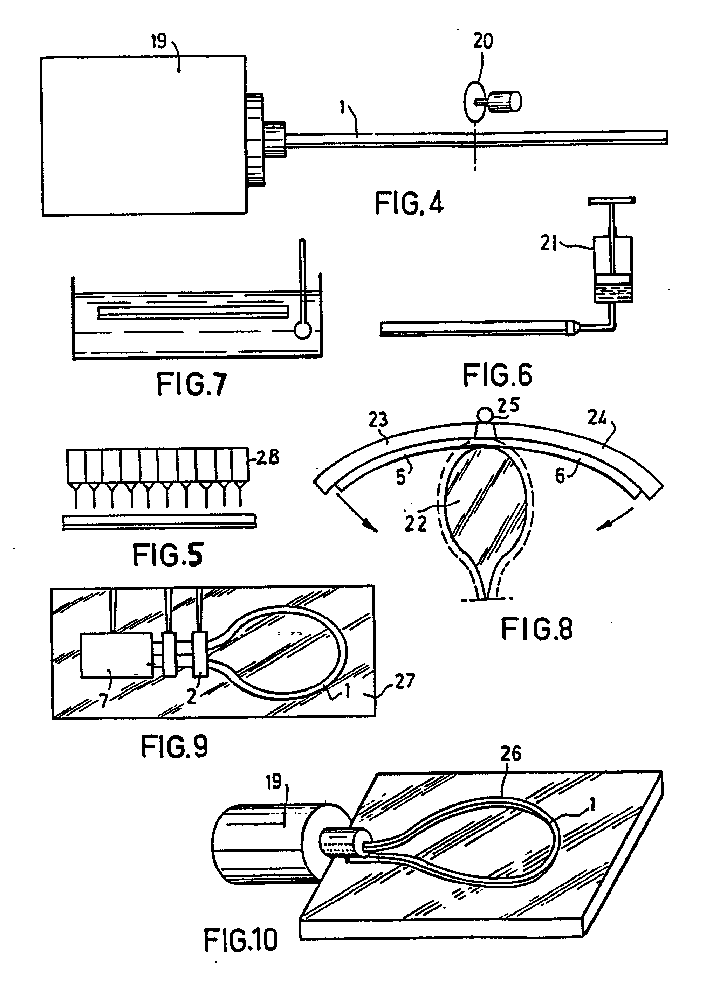

Les Figs. 4 à 9 représentent schématiquement les différentes étapes d'un procédé de fabrication d'un cadre de raquette selon l'invention.

Sur la Fig.4, une extrudeuse 19, de type classique, à l'intérieur de laquelle est introduit et fondu un compound polyamide-fibres de carbone, pousse à travers une filière un profilé 1 du type représenté en section sur les Figs. 2 et 3. Le profilé est ensuite tronçonné par une scie 20 en longueurs de cadres. Les tronçons sont ensuite percés à plat (Fig.5) et la mousse polyuréthane est introduite, dans les rainures 12 où elle s'expanse, par une presse 21 (Fig.6). Ces opérations sont effectuées alors que le profilé 1 s'est refroidi et est, par suite, solide. Afin de réaliser le cintrage à chaud, il est nécessaire de porter le compound à sa température de ramollissement. Celà peut être obtenu, comme représenté sur la Fig.7, par immersion d'un tronçon dans un bain thermostaté, par exemple d'huile de silicone, ou par tout autre moyen.

L'opération suivante est le cintrage schématisé sur la Fig.8. Le profilé est introduit dans une cintreuse constituée de deux branches 23 et 24, sensiblement dans le prolongement l'une de l'autre mais articulées l'une sur l'autre autour d'un axe 25 situé à proximité d'un noyau de conformation 22 qui reproduit le contour interne du cadre. Par rotation autour de l'axe 25, les branches 23 et 24 sont rabattues autour du noyau 22. Bien entendu, les forets 28 (Fig.5) sont espacés de sorte, qu'après cintrage, les trous 10 soient régulièrement répartis à la périphérie du cadre.

On a schématisé, sur la Fig.9, les opérations suivantes qui consistent en des injections successives. La première injection a pour but de former le coeur de la raquette par des entretoises parallèles 2, 3 et 4 (Fig.1). Le coeur est surmoulé entre les branches 5 et 6 par injection, dans un moule 27, d'une résine polyamide telle qu'un polyamide 6-6, par exemple. Ce polyamide a un point de fusion supérieur au polyamide 11 ou 12 ou 6-12 utilisé pour former le profilé. L'injection de ce polyamide provoque donc une fusion ou un ramollissement superficiel des branches 5 et 6 ce qui est très favorable à un bon accrochage. La liaison est complétée par la formation de rivets plastiques à travers les trous 10 qui sont injectés au cours de la même opération et qui présentent, sur les vis actuellement utilisées, l'avantage de ne pas se dissocier des pièces qu'ils réunissent. Les branches 5 et 6 sont en outre solidarisées, à leur extrémité inférieure, par une pièce rapportée exécutée par surinjection, entre les branches, d'une mousse polyuréthane. Au cours de cette même opération, la poignée 7 est réalisée par injection de mousse polyuréthane à peau directe. Les deux branches sont ainsi solidarisées par collage ce qui évite les vibrations et augmente la rigidité en torsion.

Les fibres de carbone du type "haute résistance" sont coupées à des longueurs de 5 à 6 mm, et ensimées à 5 % du thermoplastique de base. L'opération de compoundage et d'extrusion sont telles que la longueur résiduelle des fibres est supérieure à 1 millimètre. Les fibres de carbone sont utilisées de préférence pour leur haut module d'élasticité. Pour des raquettes moins performantes, il est également possible d'utiliser un mélange de fibres de carbone et ou de fibres de verre, à raison de plus de 15 %, en poids.

Dans la technique usuelle, les composants du compound sont mélangés intimement dans une extrudeuse qui délivre des granulés. Ce sont ces granulés qui sont à nouveau extrudés pour donner un profilé. Selon une caractéristique de l'invention, le profilé est de préférence extrudé directement, c'est à dire que l'on introduit dans l'extrudeuse du polyamide ou toute autre matière thermoplastique convenable telles que certaines qualités de polyuréthanes, polycarbonates ou polyacétals, à condition toutefois que leurs résistances sous contrainte soient suffisantes, ainsi que les fibres de carbone et/ou de verre. Le compoundage est alors réalisé directement dans l'extrudeuse, en une seule opération. Les fibres de carbone peuvent ainsi conserver une plus grande longueur. Comme il a été dit précédemment, le choix préférentiel des polyamides 11 ou 12 ou 6-12 résulte du critère de faible absorption d'eau. Les autres matières thermoplastiques présentent toutefois l'avantage d'avoir des plages de ramollissement plus larges que celles des polyamides cités.

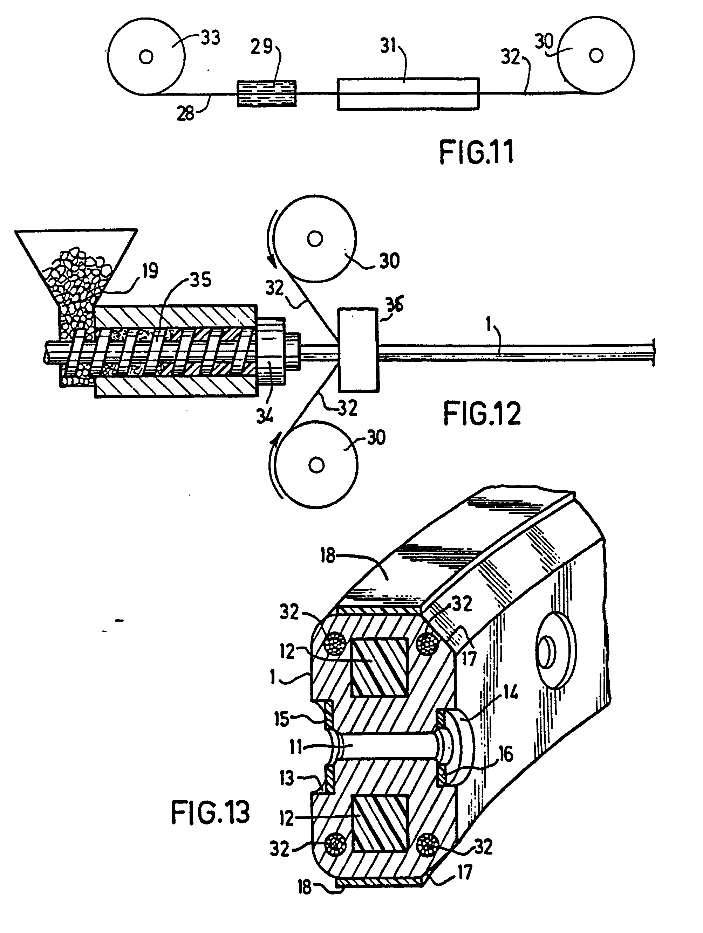

Un autre procédé de fabrication est représenté sur la Fig.10. Il repose sur l'idée qu'il est possible de conformer directement le cadre à la sortie de l'extrudeuse, alors que le profilé est encore à l'état pâteux. A cet effet, un moule présentant une rainure 26 de section égale à celle du cadre est disposé à la sortie de la filière de l'extrudeuse 19. Cette rainure guide le profilé au fur et à mesure de sa sortie de l'extrudeuse.

L'inconvenient de ce second procédé provient toutefois de la nécessité de percer les trous, après refroidissement, alors que le cadre a pris sa forme définitive. Après cintrage du profilé, un deuxième plateau est amené devant l'extrudeuse et une nouvelle extrusion-cintrage se produit. Bien entendu, la rainure 26 peut être chauffée et lubrifiée.

La présente invention permet d'obtenir des cadres de raquette de tennis dont le module d'élasticité du matériau est de l'ordre de 15 GPa.

Pour des raquettes à tamis moyen, le poids total après cordage peut varier de dix grammes en dix grammes de 365 à 395 grammes, le poids du profilé seul étant de 270 grammes environ. Comme il a été dit ci-dessus, ce poids peut varier en fonction des besoins soit par introduction de microballons creux de verre ou de silicate d'aluminium dans le compound, soit par action sur la densité de la mousse de polyuréthane introduite dans les rainures 12, soit encore par un choix approprié de la densité et des dimensions des bandes 15, 16 ou 18.

Comme il a été indiqué précédemment, l'invention vise à conserver une longueur des fibres de carbone aussi grande que possible. Dans certains cas, il n'est pas toujours possible de maîtriser d'une part la longueur des fibres de carbone après extrusion et d'autre part la répartition de ces fibres à l'intérieur du volume du cadre de la raquette. Les fibres continues, totalement imprégnées, donnent de meilleurs résultats en traction et flexibilité. Le compound réalisé ne peut pas imprégner, d'une manière satisfaisante, les mèches de fibres de carbone. Par suite, celles-ci, sans imprégnation préalable, restent sèches de sorte que leur action mécanique est pratiquement nulle. Par contre, il est hautement intéressant du point de vue de la résistance mécanique du cadre d'inclure dans celui-ci aux moins deux tresses ou mèches de fibres de carbone qui s'étendent sur toute la longueur du cadre.

De préférence, la section du cadre étant sensiblement rectangulaire, on dispose dans chacun des angles du rectangle une mèche de fibres de carbone. Ainsi, la continuité des mèches n'est pas affectée lors du perçage des trous nécessaires pour le passage des cordes. On notera qu'à l'aide d'une tête d'équerre, il est possible de disposer géométriquement les mèches d'une manière convenable alors que dans les procédés faisant appel à un moulage, le problème ne peut être résolu.

Sur la Fig.11, les mèches 28 de fibres de carbone ou de tout autre matériau présentant des caractéristiques analogues et susceptible d'être imprégné sont déroulées à partir d'une bobine 33 et passent dans un bain 29 contenant une solution d'une résine polyamide ou plus généralement d'un matériau thermoplastique, tel que du polyuréthane. Bien entendu, le choix de ce matériau résulte des caractéristiques du matériau du compound. A la sortie du bain, les solvants sont évaporés dans une étuve 31 et les mèches de fibres imprégnées 32 sont enroulées par exemple sur une bobine réceptrice 30 de rayon suffisant pour ne pas briser les fibres.

Sur la Fig.12, on a schématisé une extrudeuse 19 incluant une vis d'entraînement 35 forçant le compound à l'état fondu dans une filière 34.

Le compound est introduit à l'état de granulés dans l'extrudeuse 19 où il est fondu et dirigé sur une filière 34. Alors que la matière extrudée est encore à l'état pâteux, deux tresses imprégnées 32, ou davantage, sont introduites, en même temps que le profilé extrudé, dans une seconde filière chauffante 36. Le materiau d'impregnation des fibres de carbone subit, par suite du réchauffement, une légère fusion ce qui lui permet de s'intégrer parfaitement au compound. De préférence, l'ensemble compound + fibres subit une pultrusion comme décrit dans la demande de brevet français FR-A-2 528 318 publiée le 16 décembre 1983 ce qui assure un positionnement parfait des mèches 32.

Sur la Fig.13, on retrouve une section d'un cadre obtenu après cintrage analogue à celui de la Fig.2. Toutefois, on note aux quatre coins de la section, quatre mèches 32 de fibres de carbone ou analogue qui s'étendent sur toute la longueur du cadre.

Bien que dans la description qui précède, on ait mentionné l'utilisation de fibres de carbone et/ou de verre, il est bien entendu possible d'intégrer dans le cadre soit des fibres de bore, soit encore des fibres d'un polyamide aromatique tel que du KEVLAR (Marque déposée), sous forme de filaments ou de fibres continues.

## Revendications

1. Procédé de fabrication d'un cadre de raquette de tennis, ledit cadre étant constitué par un élément profilé qui, à partir du milieu de sa longueur totale, est arqué symétriquement pour former la tête (1) du cadre et dont les extrémités sont réunies à leur point de raccordement par au moins une entretoise (2, 3) surmoulée et s'étendent parallèlement l'une à l'autre pour former l'armature du manche, une poignée (7) étant surmoulée sur les extrémités parallèles par injection sur le profilé (1) après cintrage de celui-ci, caractérisé en ce que ledit profilé est un profilé en résine thermoplastique (1) extrudé puis cintré à chaud.

2. Procédé selon la revendication 1, caractérisé en ce que le profilé (1) est extrudé à partir d'un mélange d'une matière thermoplastique, choisi dans la classe regroupant les polyamides, polyuréthanes et résines acétal, et de fibres choisies dans la classe regroupant le carbone, le verre, le bore et les polyamides aromatiques.

3. Procédé selon l'une des revendications 1 ou 2, caractérisé en ce que ledit profilé présente au moins un compartiment longitudinal (12) creux.

4. Procédé selon l'une des revendications 1 à 3, caractérisé en ce que des bandes coextrudées (15, 16) perpendiculaires au plan du cordage sont incluses dans le cadre.

5. Procédé selon l'une quelconque des revendications précédentes, caractérisé en ce que des bandes de maintien coextrudées (18) sont disposées à la périphérie du cadre, parallèlement au plan du cordage.

6. Procédé selon l'une quelconque des revendications précédentes, caractérisé en ce qu'une matière de tarage est introduite dans le compartiment longitudinal (12).

7. Procédé selon l'une quelconque des revendications précédentes, caractérisé en ce qu'au moins une mèche continue (32) de fibres est incluse dans l'un des angles de la section de la raquette.

8. Procédé selon l'une quelconque des revendications précédentes, caractérisé en ce que des microballons creux de silicate d'aluminium sont inclus dans le mélange pour obtenir une densité de sensiblement 0,9 dudit mélange.

9. Procédé selon l'une quelconque des revendications précédentes, caractérisé en ce que l'entretoise de la raquette (2, 3) est constituée d'une matière thermoplastique injectée qui traverse des trous (10) réalisés dans le profilé, de manière à former des rivets, la liaison mécanique entre l'entretoise et le profilé étant, de plus, assurée par une fusion superficielle de la matière thermoplastique du profilé lors de l'injection de l'entretoise.

10. Cadre de raquette de tennis obtenu suivant le procédé de fabrication selon l'une quelconque des revendications 1 à 9.

**Patentansprüche**

1. Verfahren zur Herstellung eines Tennisschlägerrahmens, der von einem Profilteil gebildet wird, das, von der Mitte seiner Gesamtlänge ab symmetrisch zur Bildung des Kopfes (1) des Rahmens gebogen wird und dessen Enden an ihrer Verbindungsstelle durch mindestens eine vorgeformte Querverriegelung (2, 3) zusammengehalten sind und sich parallel zueinander erstrecken, um den Griffteil zu bilden, wobei ein Handgriff (7) um die parallelen Enden herum nach dem Umbiegen auf das Profil (1) durch einen Spritzgußvorgang geformt wird, dadurch gekennzeichnet, daß das Profil ein Profil (1) aus thermoplastischem Kunstharz ist, das extrudiert und dann warm gebogen wird.

2. Verfahren nach Anspruch 1, dadurch gekennzeichnet, daß das Profil (1) aus einer Mischung aus thermoplastischem Material extrudiert wird, die aus der sich aus Polyamiden, Polyurethanen und Azetatharzen zusammensetzenden Klasse und aus Fasern ausgewählt wird, die aus der sich aus Kohle, Glas, Bor und aromatischen Polyamiden zusammensetzenden Klasse ausgewählt ist.

3. Verfahren nach einem der Ansprüche 1 oder 2, dadurch gekennzeichnet, daß das Profil mindestens eine hohle Längskammer (12) aufweist.

4. Verfahren nach einem der Ansprüche 1 bis 3, dadurch gekennzeichnet, daß in den Rahmen senkrecht zur Bespannungsebene verlaufende mitextrudierte Bänder (15, 16) einbezogen sind.

5. Verfahren nach einem der vorhergehenden Ansprüche, dadurch gekennzeichnet, daß mitextrudierte Einfassungsbänder (18) am Umfang des Rahmens parallel zur Bespannungsebene vorgesehen sind.

6. Verfahren nach einem der vorhergehenden Ansprüche, dadurch gekennzeichnet, daß in die Längskammer (12) ein Material zum Austarieren eingefügt wird.

7. Verfahren nach einem der vorhergehenden Ansprüche, dadurch gekennzeichnet, daß mindestens ein durchgehender Strang (32) von Fasern in einer der Ecken des Querschnittes des Rahmens eingeschlossen wird.

8. Verfahren nach einem der vorhergehenden Ansprüche, dadurch gekennzeichnet, daß hohle Mikrobällchen aus Aluminiumsilikat in die Mischung eingebracht werden, um eine Dichte der Mischung von etwa 0,9 zu erhalten.

9. Verfahren nach einem der vorhergehenden Ansprüche, dadurch gekennzeichnet, daß die Verriegelung des Rahmens (2, 3) aus einem thermoplastischen Injektionsmaterial gebildet ist, das sich quer durch Löcher (10) im Profil erstreckt, um Vernietungen zu bilden, wobei die mechanische Verbindung zwischen der Verriegelung und dem Profil zusätzlich durch eine Oberflächenverschmelzung des thermoplastischen Materials des Profiles beim Einspritzen der Verriegelung gesichert wird.

10. Tennisschlägerrahmen, der nach dem Herstellungsverfahren eines der Ansprüche 1 bis 9 gebildet wurde.

**Claims**

1. A method of manufacturing a tennis racquet frame, said frame being constituted by an elongate member which is curved symmetrically from the middle of its total length to form the head (1) of the frame and whose ends are held together where they meet by at least one cross-bar (2, 3) moulded thereover said ends extending parallel to one another in order to form the core of the handle with a grip (7) being moulded over the parallel ends by being injected over the elongate member (1) after it has been curved, the method being characterized in that said elongate member is made of thermoplastic resin which is extruded and then curved while hot.

2. A method according to claim 1, characterized in that the elongate member (1) is extruded from a mixture of thermoplastic material selected from the class constituted by polyamides, polyurethanes and acetal resins, together with fibers selected fom the class constituted by carbon, glass, boron, and aromatic polyamides.

3. A method according to claim 1 or 2, characterized in that the said elongete member has at least one longitudinal hollow compartment (12).

4. A method according to any one of claims 1 to 3, characterized in that the frame includes coextruded strips (15, 16) perpendicular to the plane of the cording.

5. A method according to any preceding claim, characterized in that coextruded retaining strips (18) are disposed around the periphery of the frame, parallel to the plane of the cording.

6. A method according to any preceding claim, characterized in that rating material is inserted in the longitudinal compartment (12).

7. A method according to any preceding claim, characterized in that at least one continuous fiber strand (32) is included in one of the angles of the section of the racquet.

8. A method according to any preceding claim, characterized in that hollow microbaloons made of aluminium silicate are included in the mixture in order to obtain a mixture having a density of about 0.9.

9. A method according to any preceding claim, characterized in that the racquet cross-bar (2, 3) is constituted by a thermoplastic material injected through holes (10) provided through the elongate member so as to form rivets, the mechanical connection between the cross-bar and the elongate member being provided, in addition, by surface melting of the plastic material of the elongate member while the cross-bar is being injected.

10. A tennis racquet frame obtained using the manufacturing method of any one of claims 1 to 9.

FIG.1

FIG.2

FIG.3

FIG. 4

FIG.7

FIG.6

FIG.5

FIG.8

FIG.9

FIG.10

FIG.11

FIG.12

FIG.13